# EUROPEAN PATENT SPECIFICATION

(11) **EP 2 605 890 B1**
(45) Date of publication and mention of the grant of the patent: **19.03.2014**
(21) Application number: 11757259.4
(22) Date of filing: 09.09.2011
(51) Int. Cl.: B25J 9/16, F16P 1/02, B25J 19/06

(54) **DIMENSIONING OF A FENCE FOR A ROBOT CELL**
DIMENSIONIERUNG EINES ZAUNS FÜR EINE ROBOTERZELLE
DIMENSIONNEMENT D'UNE CLÔTURE POUR UNE CELLULE ROBOTISÉE

(43) Date of publication of application: 26.06.2013
(73) Proprietor: ABB Technology AG, 8050 Zürich (CH)
(72) Inventor: MYHR, Mats, S-722 25 Västerås (SE)
(74) Representative: Savela, Reino Aleksi
(86) International application number: PCT/EP2011/065590
(87) International publication number: WO 2013/026497

(56) References cited:
- EP-A2- 1 516 704
- DE-A1- 10 361 132
- US-A1- 2007 265 731
- US-A1- 2009 319 081

## Description

### TECHNICAL FIELD OF THE INVENTION

The present invention relates to the field of robots. The invention more particularly relates to a method, dimensioning device and computer program product for dimensioning a fence for a robot cell.

### DESCRIPTION OF RELATED ART

Industrial robots are normally provided in robot cells, within which a work area of a robot covers at least part of the cell volume. For safety reasons it is important that a robot cell is bounded by a fence. The purpose of such a fence is to protect people from being injured by the activities of the robot, or to prevent the environment around the robot cell from being damaged. A fence also stops people from entering the robot cell.

One way of providing protection in relation to a safety fence is described in US 7,664,570. Here a virtual barrier that includes the trajectory movement of a work object carried by a robot is determined. A number of three-dimensional spatial regions including a part of the robot including the work object or tool are then defined. Thereafter predicted positions of the defined three-dimensional spatial regions obtained by trajectory calculation are matched with the virtual safety barrier and if there is a coincidence the movement of the robot is stopped. The virtual safety barrier is thus provided in relation to the movement of the robot.

Document US2009/319081 A1, entitled "Method and system for designing and checking safety zones of a robot", discloses a method and associated system for designing and checking safety zones for a robot, which may be implemented as fences or walls, wherein off-line simulations of the robot movement are performed, a number of points on its movement path are selected and a braking path is calculated at each of said points. Said braking paths are used to determine a virtual movement zone of said robot, which is the maximum area which can be reached by the robot for that movement path. The position and/or orientation of the tool is also considered when performing said calculations. A check for any collision between the safety zone and the maximum position which can be reached by the robot is performed, and in case that a collision is detected, it is possible to adapt either the position and size of the safety zone and/or the movement path of the robot and/or the robot velocity. A further collision check can be repeated using the modified constraints. An optimization of the position and size of the safety zone by modification of the robot movement is also possible.

There is however a need for protection against activities like an accidental throwing of work objects by the robot.

For such protection it is important that a real fence is provided. A conventional fence surrounding a robot cell is overdimensioned both in height and in strength. The material used for such a fence is expensive, and there is therefore a need to limit the use of material without at the same time jeopardizing the safety of people.

### SUMMARY OF THE INVENTION

The present invention is therefore directed towards dimensioning a fence for a robot cell according to a real need in terms of height and strength.

One object of the present invention is to provide a method for dimensioning a fence for a robot cell, which dimensioning is economical in terms of material while at the same time providing sufficient protection of people. Another object of the present invention is to provide a dimensioning device which enables execution of the aforementioned economical dimensioning method. Yet another object of the present invention is to provide a computer program product which enables a convenient execution of the aforementioned economical dimensioning method. These objects are achieved, respectively, by the method according to appended claim 1, by the dimensioning device according to appended claim 8, and by the computer program product according to appended claim 15.

According to a first aspect of the invention, there is provided a method for dimensioning a fence for a robot cell comprising a robot, the method comprising the steps of:
- obtaining at least one losing point within a virtual robot cell, at which losing point the robot is assumed to lose hold of a work object,
- calculating at least one trajectory for the work object starting from the losing point, and
- dimensioning a fence on the basis of said calculated trajectory.

When the fence dimensioning is based on a calculated trajectory, the resulting fence height corresponds to a real need.

According to a second aspect of the invention, there is provided a dimensioning device for dimensioning a fence for a robot cell comprising a robot. The dimensioning device comprises a trajectory determining unit configured to obtain at least one losing point within a virtual robot cell, at which losing point the robot is assumed to lose hold of a work object, and to calculate at least one trajectory for the work object starting from the losing point. The dimensioning device further comprises a fence dimensioning unit configured to dimension a fence on the basis of said calculated trajectory.

According to a third aspect of the invention, there is provided computer program product for dimensioning a fence for a robot cell comprising a robot, the computer program product comprising a data carrier with computer program code which when run in a dimensioning device for dimensioning a fence causes the dimensioning device to:
- obtain at least one losing point within a virtual robot cell, at which losing point the robot is assumed to lose hold of a work object,
- calculate at least one trajectory for the work object starting from the losing point, and
- dimension a fence on the basis of said calculated trajectory.

The present invention has many advantages. It provides the dimensioning of a fence in a manner that both considers safety aspects and at the same time enables the reduction of the amount of material needed for producing it. This may furthermore be done in a flexible manner.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a robot cell comprising a robot standing on a cell floor,
fig. 2 schematically shows the robot within a cell volume,
fig. 3 schematically shows the robot as it moves a work object along an object carrying path within the robot cell,
fig. 4 schematically shows a losing point at which the robot loses hold of the work object, a trajectory of the object starting from the losing point, and an exit point where the object leaves a virtual robot cell,
fig. 5 schematically shows a dimensioning device according to an embodiment of the invention,
fig. 6 schematically shows a computer program product according to an embodiment of the invention, and
fig. 7 shows a number of method steps being performed in a method according to an embodiment of the invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices, circuits, and methods are omitted so as not to obscure the description of the present invention with unnecessary detail.

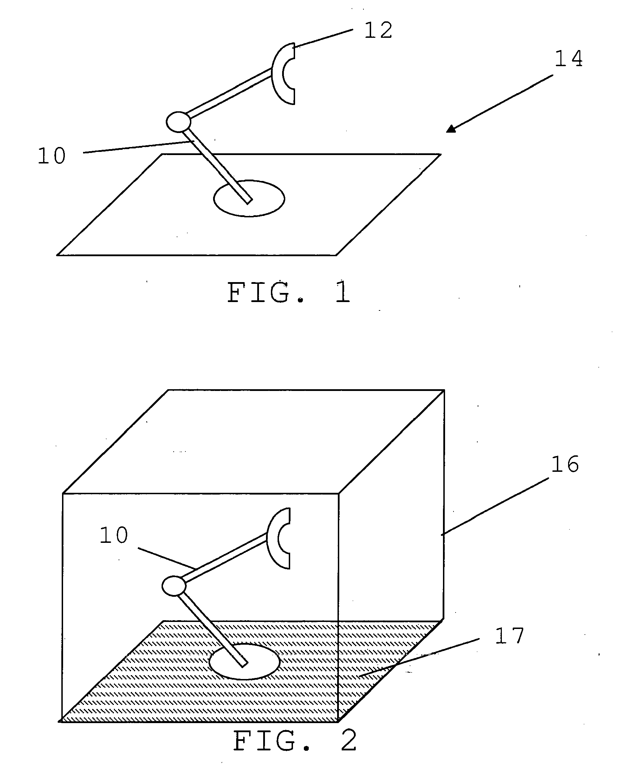

Fig. 1 schematically shows a robot cell comprising a robot 10 standing on a cell floor 14. The robot 10, which is typically an industrial robot, is also shown as being equipped with a gripper 12. This gripper 12 is furthermore arranged to be used to pick up and move a work object. The robot cell is typically provided by limiting a section of a floor of the factory building to form the cell floor 14.

The cell floor 14 needs to be surrounded with a fence to at least keep people off the robot cell. Therefore, the lower part of the fence, denoted as standard fence in the following, needs to be at least high enough and strong enough to keep people off. Depending on the robot application and the properties of the work object(s), the fence may need to be dimensioned not only high enough to keep people off, but even higher than that to prevent work objects thrown by the robot 10 from exiting the robot cell. If the robot 10 handles very light-weight work objects high above the cell floor 14, the fence needs on one hand to be high, but on the other hand not so strong above the standard fence. The robot cell may also be provided at least partially with a ceiling if this is an advantageous alternative to dimensioning the fence high. Analogously, the fence may need to be dimensioned not only strong enough to keep people off, but even stronger than that to be able to absorb the momentum of work objects thrown by the robot 10.

Fig. 2 shows an example of a cell volume 16 which encloses the robot 10. The cell volume 16 is defined by a quadratic cell floor area 17 and vertical equally high fences. With vertical equally high fences and with a rectangular cell floor area 17 the volume form becomes a cuboid, and with a circular cell floor area 17 the volume form would become a cylinder. It should however be realized that other types of volume forms are feasible. A circular cell floor area 17 could for instance define a hemispherical cell volume 16. In the example in fig. 2 the cell volume 16 is close to cubic.

The term "cell volume" refers to a volume defined by physical fences surrounding the volume. The term "robot cell", on the other hand, refers to an eventually larger and more ambiguously defined volume which in addition to the cell volume 16 also comprises any additional volume which the robot 10 and a work object under normal operation of the robot 10 can reach. Typically this additional volume would comprise a vertical extrusion of the cell floor area 17 above the physical fences. The cell volume 16 may furthermore be defined so that the whole robot movement is contained inside it. It is thus possible that the robot 10 cannot move so that any part of it moves outside of the cell volume 16. It is furthermore possible that a work object being carried by the robot 10 never exits the cell volume 16 during the time that it is carried.

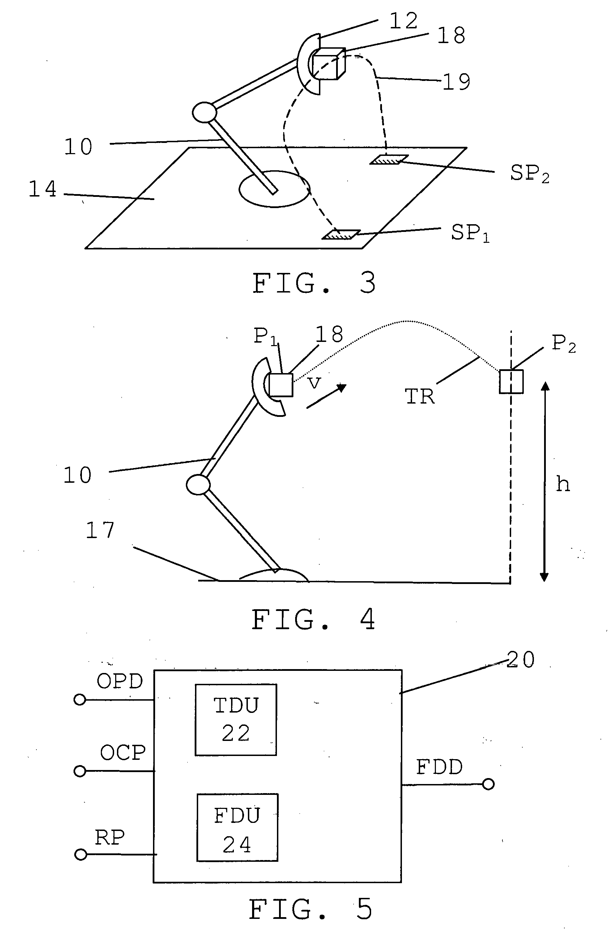

Referring to fig. 3, when the robot 10 is moving a work object 18, it may move it along an object carrying path 19 provided inside the robot cell. The robot 10 is shown as picking up the work object 18 at a start position SP₁ and leaving it at a stop position SP₂. The robot 10 thus grips the work object 18 using the gripper 12 at the start position SP₁, moves the work object 18 along an object carrying path 19 within the robot cell and leaves it at the stop position SP₂.

Now as the robot 10 moves the work object 18 along the object carrying path 19, it is possible that the work object 18 is accidentally dropped i.e. the robot 10 may lose hold of the work object 18.

Fig. 4 schematically shows a situation where the robot 10 accidentally loses hold of the work object 18. Here a side view of the robot 10 is presented as it has carried the work object 18 to a point P₁. At this point P₁, which in the following is called a "losing point" P₁, the robot 10 loses hold of the work object 18. The movement of the robot 10 may then cause the work object 18 to be thrown. The work object 18 therefore has a trajectory TR along which it moves after the robot 10 has lost hold of it. The work object 18 will when traveling along the trajectory TR leave a virtual robot cell at an exit point P₂. The virtual robot cell is defined by certain constraints which the user has chosen for the robot cell. Such constraints typically comprise the cell floor area 17 and an assumption that all fences are vertical, but they may further comprise a maximum robot cell height. In fig. 4 one such constraint is illustrated with a broken line. Now it is vital that the work object 18 when being accidentally thrown in this way is stopped from leaving the robot cell. For this reason the robot cell should be provided with a safety fence.

It is important that the safety fence provides the intended functionality, i.e. stops the work object 18 from leaving the robot cell. However it is at the same time important that the safety fence is produced economically. It is desirable that the material used for the fence is limited.

Fig. 5 shows a schematic block of a dimensioning device 20 for dimensioning a fence for a robot cell according to the invention. The dimensioning device 20 comprises a first input on which it receives object property data OPD, a second input on which it receives object carrying path data OCP and a third input on which it receives robot property data RP. The dimensioning device 20 furthermore comprises a trajectory determining unit (TDU) 22 and a fence dimensioning unit (FDU) 24 as well as an output on which fence dimensioning data FDD is provided.

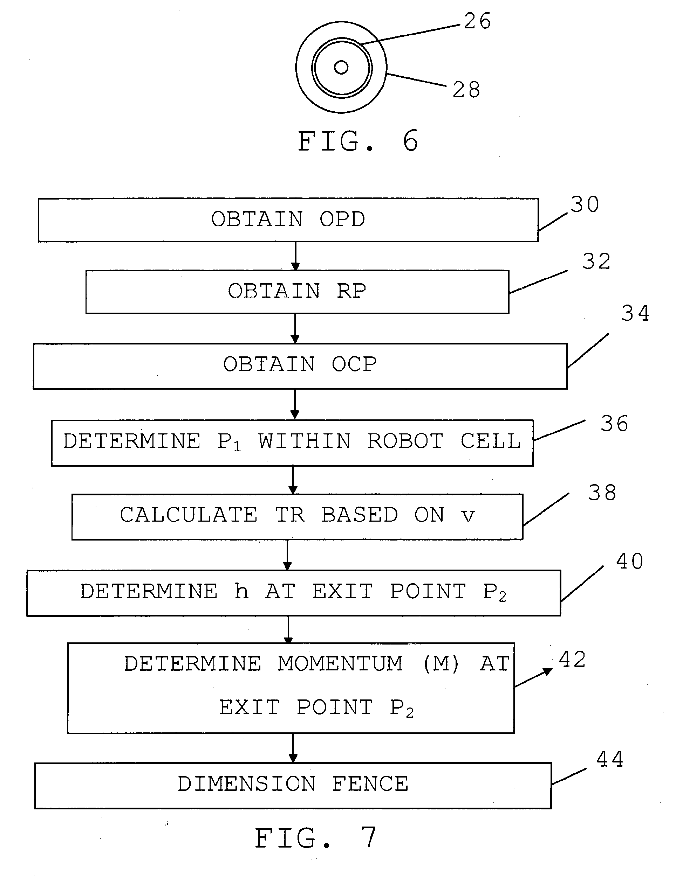

The dimensioning device 20 may be provided as software in a computer and may more particularly be provided as a simulation program in such a computer. Referring to fig. 6, the simulation program may furthermore be provided in the form of a computer program product, for instance as a data carrier 26 in the form of a CD ROM disc carrying a computer program code 28 for implementing the trajectory determining unit 22 and fence dimensioning unit 24 when being loaded into a computer and run by that computer. A CD ROM disc is only one example of a data carrier 26. It is feasible with other data carriers 26, like memory sticks.

The functioning of the present invention as carried out by the dimensioning device 20 will now be further described with reference being made to fig. 7, which shows a flow chart of a number of method steps being carried out in a method for dimensioning a fence for a robot cell according to an embodiment of the invention.

When designing a robot cell, it is difficult to assess how high and strong safety fences need to be in order to handle lost work objects 18. A proper fence dimensioning calls for a need to assess both the trajectory TR and the impact force from a lost work object 18.

The method starts by the trajectory determining unit 22 of the dimensioning device 20 obtaining object property data OPD regarding a work object 18, step 30. This data may be obtained through an operator entering such data via a user input unit such as a keyboard. However it is also possible that the dimensioning device 20 is equipped with a memory in which object property data OPD regarding various selectable work objects 18 may be stored. In this case it is possible that a selection of a certain work object 18 by an operator leads to the object property data OPD of this work object 18 being automatically fetched by the trajectory determining unit 22. Object property data OPD may here comprise data such as mass, size, shape, volume, density, elasticity, air resistance, aerodynamic properties etc.

The trajectory determining unit 22 also obtains robot property data RP regarding a robot 10, step 32. Also this data may be obtained through an operator entering such data via a user input unit. However it is also possible that the dimensioning device 20 is equipped with a memory in which the robot property data RP regarding various robots 10 may be stored. In this case it is possible that a selection of a certain robot 10 by an operator leads to the robot property data RP of this robot 10 being automatically fetched by the trajectory determining unit 22. It is furthermore possible that there is a correlation between work objects 18 and robots 10. One type of work object 18 may only be handled by a certain type of robot 10, or one type of robot 10 may only handle a certain type of work object 18. In case such a correlation exists, then the selection of for instance a certain work object 18 could lead to the automatic fetching of the object property data OPD as well as the associated robot 10, and vice versa.

The robot property data RP may comprise data such as speed, force and mass of the robot 10 as well as of moving parts and then especially the speed and force of the gripper 12. The robot property data RP may also comprise data specifying the location of the robot 10 within the virtual robot cell.

The trajectory determining unit 22 furthermore obtains object carrying path data OCP defining at least a part of an object carrying path 19, step 34. The work object 18 may be involved in an industrial process in which it is only transported by the robot 10 from the start position SP₁ to the stop position SP₂. The respective object carrying path 19 could be entered by an operator, or it could be automatically fetched from a path memory by the trajectory determining unit 22 as a response to an operator selecting a certain industrial process. There may here also exist correlated robot movement data linked to the objet carrying path data OCP, such as the velocity of the gripper 12 at various points along the object carrying path 19. It is here also possible that a specific work object 18 will only be transported along a certain object carrying path 19, in which case the selection of a work object 18 may also be the selection of a corresponding object carrying path 19.

When all the previously mentioned data OPD, RP, OCP has been obtained, the trajectory determining unit 22 then proceeds with the determining of at least one trajectory TR. This starts with the determining of at least one losing point P₁ within the robot cell, step 36. This means that the trajectory determining unit 22 determines one or more positions within the robot cell at which it assumes that the robot 10 will lose hold of the work object 18. Such a position can be obtained in a number of ways. It is possible to select the highest position that the gripper 12 can occupy in the robot cell based on the location of the robot 10. If the object carrying path 19 is used, the losing point P₁ may also be a point on the object carrying path 19, such as a point where the gripper 12 has the highest speed. The losing point P₁ may also be selected based on a combination of height and speed.

The losing point P₁ may furthermore be selected based on a probability of the robot 10 losing hold. There may for instance be certain positions along the object carrying path 19 in which the hold of the work object 18 by the gripper 12 is less tight than at other points. It is furthermore possible to select all points of the object carrying path 19 or all points on a part of the object carrying path 19 as losing points P₁. When selecting losing points P₁ in this way it is possible that the losing points P₁ are separated according to sampling interval, which sampling interval may be selectable by an operator.

When a losing point P₁ has been determined, the velocity v of the work object 18 at the losing point P₁ is determined. The velocity v may be calculated based on the object property data, the robot property data RP and the object carrying path data.

A trajectory TR of the work object 18 starting from the losing point P₁ is then calculated based on the velocity v and properties of the work object 18, step 38. The relevant properties of the work object 18 may include mass, air resistance, and aerodynamic properties. However, in a simplified model any or all of these properties may be disregarded. It depends on the shape of the work object 18 how important it is to consider certain property. If for instance the work object 18 is shaped as a barrel lid it is very important to consider the aerodynamic properties because of frisbee effect.

Thereafter the trajectory determining unit 22 investigates if the work object 18 when travelling along the trajectory TR leaves the virtual robot cell, and if so, at which exit point P₂. The trajectory determining unit 22 may more particularly determine the height h above the cell floor area 17 for this exit point P₂, step 40.

The trajectory determining unit 22 may furthermore determine the momentum M of the work object 18 at the exit point P₂, step 42. The momentum M is determined based on the velocity v and the mass m of the work object 18. More particularly, the momentum in the direction at right angles to the boundaries of the virtual robot cell may be determined.

The height h and the momentum M are then forwarded to the fence dimensioning unit 24. The fence dimensioning unit 24 dimensions at least a part of a fence on the basis of at least one calculated trajectory TR, step 44. It more particularly dimensions the fence based on the received height h and possibly also the momentum data, where the received height h is used for deciding at least one fence height, and the momentum M is used to determine properties of the fence such as resistance. This determination can be made using some safety margins and may also consider various fence materials. The selection may involve selecting the height h of the highest trajectory TR of a number of trajectories TR, and possibly also the momentum of a trajectory TR having the highest momentum M at the exit point P₂. These two trajectories TR may be the same. However, they may be also be two different trajectories TR that are worst case trajectories TR concerning height h or impact resistance.

When the dimensions have been determined in this way it is possible to transmit fence dimensioning data FDD to a fence manufacturing plant, which goes on and manufactures a fence according to the fence dimensioning data FDD. The fence may then be mounted around a robot cell arranged to operate with work objects 18 having the properties on which the calculations were based.

There are a number of variations that may be made in relation to the present invention. It is for instance possible to determine the fence properties in one direction away from the robot 10 and use it for all other directions. If a rectangular cell floor area 17 is used it is furthermore possible to determine four different trajectories TR, which may be four worst case trajectories TR radially away from the location of the robot 10 and separated ninety degrees from each other. These different trajectories TR may then be used for dimensioning four different sides of a fence joined to each other at right angles.

The dimensioned fence may also be set to cope with a worst case trajectory TR and a worst case impact force from a lost work object 18, for instance when the robot 10 is executing a specific work cycle. It is also possible to determine a worst case from an arbitrary robot work cycle, however with user imposed limitations such as a maximum trajectory height.

It is furthermore possible to only determine the fence height and select a default fence property, like a default resistance.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. A method for dimensioning a fence for a robot cell comprising a robot (10), **characterized in that** it comprises the steps of:
- obtaining (36) at least one losing point (P₁) within a virtual robot cell, at which losing point (P₁) the robot (10) is assumed to lose hold of a work object (18),
- calculating (38) at least one trajectory (TR) for the work object (18) starting from the losing point (P₁), and
- dimensioning (44) a fence on the basis of said calculated trajectory (TR).

2. The method according to claim 1, further comprising the step of:
- determining (40) a fence height based on the height (h) of an exit point (P₂) where the work object (18) leaves the virtual robot cell.

3. The method according to claim 1 or 2, further comprising the steps of:
- calculating (42) a momentum (M) of the work object (18), and
- dimensioning said fence on the basis of the calculated momentum.

4. The method according to claim 3, further comprising the step of:
- determining the properties of at least a part of the fence based on the momentum of the work object (18) at the exit point (P₂).

5. The method according to any previous claim, wherein the calculation of said trajectory (TR) involves determining the velocity (v) of the work object (18) at the losing point (P₁).

6. The method according to any previous claim, further comprising the steps of:
- obtaining (34) object carrying path data (OCP), said objet carrying path data (OCP) defining an object carrying path (19) within the robot cell along which the robot (10) carries the work object (18), and
- choosing the losing point (P₁) to be a point on said object carrying path (19).

7. The method according to any previous claim further comprising the step of:
- determining a number of trajectories (TR) and selecting at least one worst case trajectory (TR) to be used as a basis for dimensioning said fence.

8. A dimensioning device (20) for dimensioning a fence for a robot cell comprising a robot (10), the dimensioning device (20) **characterized in that** it comprises:
a trajectory determining unit (22) configured to obtain at least one losing point (P₁) within a virtual robot cell, at which losing point (P₁) the robot (10) is assumed to lose hold of a work object (18), and to calculate at least one trajectory (TR) for the work object (18) starting from the losing point (P₁); and
a fence dimensioning unit (24) configured to dimension a fence on the basis of said calculated trajectory (TR).

9. The dimensioning device (20) according to claim 8, wherein the fence dimensioning unit (24) is configured to determine the fence height based on the height (h) of an exit point (P₂) where the work object (18) leaves the virtual robot cell.

10. The dimensioning device (20) according to claim 8 or 9, wherein the dimensioning device (20) is configured to calculate a momentum (M) of the work object (18), and the fence dimensioning unit (24) is configured to perform the dimensioning of said fence also on the basis of the calculated momentum.

11. The dimensioning device (20) according to claim 10, wherein the fence dimensioning unit (24) is configured to determine the properties of at least a part of the fence based on the momentum of the work object (18) at the exit point (P₂).

12. The dimensioning device (20) according to any of claims 8 - 11, wherein the trajectory determining unit (22) when calculating said trajectory (TR) is configured to determine the velocity (v) of the work object (18) at the losing point (P₁).

13. The dimensioning device (20) according to any of claims 8 - 12, wherein the trajectory determining unit (22) is further configured to obtain object carrying path data (OCP), said objet carrying path data (OCP) defining an object carrying path (19) within the robot cell along which the robot (10) carries the work object (18), and to choose the losing point (P₁) to be a point on the object carrying path (19).

14. The dimensioning device (20) according to any of claims 8 - 13, wherein the trajectory determining unit (22) is further configured to determine a number of trajectories (TR), and the fence dimensioning unit (24) is configured to select at least one worst case trajectory (TR) to be used as a basis for dimensioning said fence.

15. A computer program product for dimensioning a fence for a robot cell comprising a robot (10), the computer program product **characterized in that** it comprises a data carrier (26) with computer program code (28) which when run in a dimensioning device (20) for dimensioning a fence causes the dimensioning device (20) to:
- obtain at least one losing point (P₁) within a virtual robot cell, at which losing point (P₁) the robot (10) is assumed to lose hold of a work object (18),
- calculate at least one trajectory (TR) for the work object (18) starting from the losing point (P₁), and
- dimension a fence on the basis of said calculated trajectory (TR).

## Patentansprüche

1. Verfahren zum Dimensionieren eines Zauns für eine Roboterzelle, die einen Roboter (10) enthält, **dadurch gekennzeichnet, dass** es die folgenden Schritte umfasst:
- Erhalten (36) wenigstens eines Verlustpunkts (P₁) in einer virtuellen Roboterzelle, wobei angenommen wird, dass der Roboter (10) am Verlustpunkt (P₁) den Halt eines Arbeitsgegenstands (18) verliert,
- Berechnen (38) wenigstens einer Bahn (TR) für den Arbeitsgegenstand (18) beginnend bei dem Verlustpunkt (P₁) und
- Dimensionieren (44) eines Zauns anhand der berechneten Bahn (TR).

2. Verfahren nach Anspruch 1, das ferner den folgenden Schritt umfasst:
- Bestimmen (40) einer Zaunhöhe anhand der Höhe (h) eines Austrittspunkts (P₂), an dem der Arbeitsgegenstand (18) die virtuelle Roboterzelle verlässt.

3. Verfahren nach Anspruch 1 oder 2, das ferner die folgenden Schritte umfasst:
- Berechnen (42) eines Impulses (M) des Arbeitsgegenstands (18) und
- Dimensionieren des Zauns anhand des berechneten Impulses.

4. Verfahren nach Anspruch 3, das ferner den folgenden Schritt umfasst:
- Bestimmen der Eigenschaften wenigstens eines Teils des Zauns anhand des Impulses des Arbeitsgegenstands (18) an dem Austrittspunkt (P₂).

5. Verfahren nach einem vorhergehenden Anspruch, wobei das Berechnen der Bahn (TR) das Bestimmen der Geschwindigkeit (v) des Arbeitsgegenstands (18) an dem Verlustpunkt (P₁) umfasst.

6. Verfahren nach einem vorhergehenden Anspruch, das ferner die folgenden Schritte umfasst:
- Erhalten (34) von Gegenstandsführungspfad-Daten (OCP), wobei die Gegenstandsführungspfad-Daten (OCP) einen Gegenstandsführungspfad (19) innerhalb der Roboterzelle definieren, längs dessen der Roboter (10) den Arbeitsgegenstand (18) führt, und
- Wählen des Verlustpunkts (P₁) als einen Punkt auf dem Gegenstandsführungspfad (19).

7. Verfahren nach einem vorhergehenden Anspruch, das ferner den folgenden Schritt umfasst:
- Bestimmen einer Anzahl von Bahnen (TR) und Wählen wenigstens einer zu verwendenden Bahn (TR), die dem schlimmsten Fall entspricht, als Basis für die Dimensionierung des Zauns.

8. Dimensionierungsvorrichtung (20) zum Dimensionieren eines Zauns für eine Roboterzelle, die einen Roboter (10) enthält, wobei die Dimensionierungsvorrichtung (20) **dadurch gekennzeichnet ist, dass** sie Folgendes umfasst:
eine Bahnbestimmungseinheit (22), die konfiguriert ist, wenigstens einen Verlustpunkt (P₁) in einer virtuellen Roboterzelle zu erhalten, wobei angenommen wird, dass der Roboter (10) an dem Verlustpunkt (P₁) den Halt eines Arbeitsgegenstands (18) verliert, und wenigstens eine Bahn (TR) für den Arbeitsgegenstand (18) beginnend bei dem Verlustpunkt (P₁) zu berechnen; und
eine Zaundimensionierungseinheit (24), die konfiguriert ist, einen Zaun anhand der berechneten Bahn (TR) zu dimensionieren.

9. Dimensionierungsvorrichtung (20) nach Anspruch 8, wobei die Zaundimensionierungseinheit (24) konfiguriert ist, die Zaunhöhe anhand der Höhe (h) eines Austrittspunkts (P₂), an dem der Arbeitsgegenstand (18) die virtuelle Roboterzelle verlässt, zu bestimmen.

10. Dimensionierungsvorrichtung (20) nach Anspruch 8 oder 9, wobei die Dimensionierungsvorrichtung (20) konfiguriert ist, einen Impuls (M) des Arbeitsgegenstands (18) zu berechnen, und die Zaundimensionierungseinheit (24) konfiguriert ist, die Dimensionierung des Zauns auch anhand des berechneten Impulses vorzunehmen.

11. Dimensionierungsvorrichtung (20) nach Anspruch 10, wobei die Zaundimensionierungseinheit (24) konfiguriert ist, die Eigenschaften wenigstens eines Teils des Zauns anhand des Impulses des Arbeitsgegenstands (18) am Austrittspunkt (P₂) zu bestimmen.

12. Dimensionierungsvorrichtung (20) nach einem der Ansprüche 8-11, wobei die Bahnbestimmungseinheit (22) dann, wenn sie die Bahn (TR) berechnet, konfiguriert ist, die Geschwindigkeit (v) des Arbeitsgegenstands (18) am Verlustpunkt (P₁) zu bestimmen.

13. Dimensionierungsvorrichtung (20) nach einem der Ansprüche 8-12, wobei die Bahnbestimmungseinheit (22) ferner konfiguriert ist, Gegenstandsführungspfad-Daten (OCP) zu erhalten, wobei die Gegenstandsführungspfad-Daten (OCP) einen Gegenstandsführungspfad (19) innerhalb der Roboterzelle definieren, längs dessen der Roboter (10) den Arbeitsgegenstand (18) führt, und den Verlustpunkt (P₁) als einen Punkt auf dem Gegenstandsführungspfad (19) zu wählen.

14. Dimensionierungsvorrichtung (20) nach einem der Ansprüche 8-13, wobei die Bahnbestimmungseinheit (22) ferner konfiguriert ist, eine Anzahl von Bahnen (TR) zu bestimmen, und die Zaundimensionierungseinheit (24) konfiguriert ist, wenigstens eine zu verwendende Bahn (TR), die dem schlimmsten Fall entspricht, als Basis für die Dimensionierung des Zauns zu wählen.

15. Computerprogrammprodukt zum Dimensionieren eines Zauns für eine Roboterzelle, die einen Roboter (10) enthält, wobei das Computerprogrammprodukt **dadurch gekennzeichnet ist, dass** es einen Datenträger (26) mit Computerprogrammcode (28) umfasst, der dann, wenn er in einer Dimensionierungsvorrichtung (20) zum Dimensionieren eines Zauns ausgeführt wird, die Dimensionierungsvorrichtung (20) dazu veranlasst:
- wenigstens einen Verlustpunkt (P₁) in einer virtuellen Roboterzelle zu erhalten, wobei angenommen wird, dass der Roboter (10) an dem Verlustpunkt (P₁) den Halt eines Arbeitsgegenstands (18) verliert,
- wenigstens eine Bahn (TR) für den Arbeitsgegenstand (18) beginnend bei dem Verlustpunkt (P₁) zu berechnen und
- einen Zaun anhand der berechneten Bahn (TR) zu dimensionieren.

## Revendications

1. Procédé permettant de dimensionner une barrière pour une cellule robotisée comprenant un robot (10), caractérisé en en ce qu'il comprend les étapes suivantes :
- la récupération (36) d'au moins un point de perte (P₁) à l'intérieur de la cellule robotisée virtuelle, point de perte (P₁) au niveau duquel le robot (10) est supposé perdre le maintien d'un objet à manufacturer (18),
- le calcul (38) d'au moins une trajectoire (TR) avec laquelle l'objet à manufacturer (18) démarre à partir du point de perte (P₁), et
- le dimensionnement (44) d'une barrière sur la base de ladite trajectoire (TR) calculée.

2. Procédé selon la revendication 1, comprenant en outre l'étape suivante :
- la détermination (40) d'une hauteur de barrière fondée sur la hauteur (h) d'un point de sortie (P₂) ou l'objet à manufacturer (18) quitte la cellule robotisée virtuelle.

3. Procédé selon la revendication 1 ou 2, comprenant en outre les étapes suivantes :
- le calcul (42) d'un moment (M) de l'objet à manufacturer (18), et
- le dimensionnement de ladite barrière sur la base du moment calculé.

4. Procédé selon la revendication 3, comprenant en outre l'étape suivante :
- la détermination des propriétés d'au moins une partie de la barrière sur la base du moment de l'objet à manufacturer (18) au niveau du point de sortie (P₂).

5. Procédé selon l'une quelconque des revendications précédentes dans lequel le calcul de ladite trajectoire (TR) met en jeu la détermination de la vitesse (v) de l'objet à manufacturer (18) au niveau du point de perte (P₁).

6. Procédé selon l'une quelconque des revendications précédentes comprenant en outre les étapes suivantes :
- la récupération (34) de données du trajet de transport de l'objet (OCP), lesdites données du trajet de transport de l'objet (OCP) définissant un trajet de transport de l'objet (19) à l'intérieur de la cellule robotisée, trajet le long duquel le robot (10) transporte l'objet à manufacturer (18), et
- le choix du point de perte (P₁) pour qu'il soit un point sur ledit trajet de transport de l'objet (19).

7. Procédé selon l'une quelconque des revendications précédentes comprenant l'étape suivante :
- la détermination d'un certain nombre de trajectoires (TR) et la sélection d'au moins une trajectoire (TR) de pire cas pour qu'elle soit utilisée comme base de dimensionnement de ladite barrière.

8. Dispositif de dimensionnement (20) permettant de dimensionner une barrière pour une cellule robotisée, comprenant un robot (10) le dispositif de dimensionnement (20) étant **caractérisé en ce qu'**il comprend :
une unité de détermination de trajectoire (22) configurée pour récupérer au moins un point de perte (P₁) à l'intérieur d'une cellule robotisée virtuelle, point de perte (P₁) auquel le robot (10) est supposé perdre le maintien d'un objet à manufacturer (18), et
configuré pour calculer au moins une trajectoire (TR) pour l'objet à manufacturer (18) démarrant à partir du point de perte (P₁), ainsi que qu'une unité de dimensionnement de barrière (24) configurée pour dimensionner une barrière sur la base de ladite trajectoire (TR) calculée.

9. Dispositif de dimensionnement (20) selon la revendication 8, dans lequel l'unité de dimensionnement de barrière (24) est configurée pour déterminer la hauteur de la barrière sur la base de la hauteur (h) d'un point de sortie (P₂) où l'objet à manufacturer (18) quitte la cellule robotisée virtuelle.

10. Dispositif de dimensionnement (20) selon la revendication 8 ou 9, dans lequel le dispositif de dimensionnement (20) est configuré pour calculer un moment (M) de l'objet à manufacturer (18), et l'unité de dimensionnement de barrière (24) est configurée pour effectuer le dimensionnement de ladite barrière, également sur la base du moment calculé.

11. Dispositif de dimensionnement (20) selon la revendication 10, dans lequel l'unité de dimensionnement de barrière (24) est configurée pour déterminer les propriétés d'au moins une partie de la barrière sur la base du moment de l'objet à manufacturer (18) au niveau du point de sortie (P₂).

12. Dispositif de dimensionnement (20) selon l'une quelconque des revendications 8 à 11, dans lequel l'unité de détermination de trajectoire (22), lors du calcul de ladite trajectoire (TR), est configurée pour déterminer la vitesse (v) de l'objet à manufacturer (18) au niveau du point de perte (P₁).

13. Dispositif de dimensionnement (20) selon l'une quelconque des revendications 8 à 12, dans lequel l'unité de détermination de trajectoire (22) est en outre configurée pour récupérer des données de trajet de transport de l'objet (OCP), lesdites données de trajet de transport de l'objet (OCP) définissant un trajet de transport de l'objet (19) à l'intérieur de la cellule robotisée le long duquel le robot (10) transporte l'objet à manufacturer (18), ainsi que pour choisir le point de perte (P₁) pour qu'il soit un point sur le trajet de transport de l'objet (19).

14. Dispositif de dimensionnement (20) selon l'une quelconque des revendications 8 à 13, dans lequel l'unité de détermination de trajectoire (22) est en outre configurée pour déterminer un certain nombre de trajectoires (TR), et l'unité de dimensionnement de barrière (24) est configurée pour sélectionner au moins une trajectoire (TR) de pire cas pour qu'elle soit utilisée comme base de dimensionnement de ladite barrière.

15. Produit de programme informatique destiné à dimensionner une barrière pour une cellule robotisée, comprenant un robot (10), le programme informatique étant **caractérisé en ce qu'**il comprend un support de données (26) avec le code de programme informatique (28) qui, lorsqu'il est exécuté dans un dispositif de dimensionnement (20) permettant de dimensionner une barrière amène le dispositif de dimensionnement (20)
- à récupérer au moins un point de perte (P₁) à l'intérieur d'une cellule robotisée virtuelle, point de perte (P₁) au niveau duquel le robot (10) est supposé perdre le maintien d'un objet à manufacturer (18),
- à calculer au moins une trajectoire (TR) pour l'objet à manufacturer (18) démarrant à partir du point de perte (P₁), et
- à dimensionner une barrière sur la base de ladite trajectoire (TR) calculée.
